# EUROPÄISCHE PATENTSCHRIFT

(11) **EP 1 929 331 B1**
(45) Veröffentlichungstag und Bekanntmachung des Hinweises auf die Patenterteilung: **04.09.2013**
(21) Anmeldenummer: 06791643.7
(22) Anmeldetag: 25.08.2006
(51) Int. Cl.: G01S 13/93

(54) **KRAFTFAHRZEUG-RADARVERFAHREN UND -RADARSYSTEM**
MOTOR VEHICLE WHEEL BEHAVIOUR AND RADAR SYSTEM
PROCEDE DE RADAR DE VEHICULE AUTOMOBILE ET SYSTEME DE RADAR DE VEHICULE AUTOMOBILE

(30) Priorität: 29.09.2005 DE 102005048209
(43) Veröffentlichungstag der Anmeldung: 11.06.2008
(73) Patentinhaber: Valeo Schalter und Sensoren GmbH, 74321 Bietigheim-Bissingen (DE)
(72) Erfinder: HABERLAND, Udo, 71088 Holzgerlingen (DE); LÜBBERT, Urs, 74321 Bietigheim-Bissingen (DE)
(74) Vertreter: Pothmann, Karsten
(86) Internationale Anmeldenummer: PCT/EP2006/008325
(87) Internationale Veröffentlichungsnummer: WO 2007/036273

(56) Entgegenhaltungen:
- DE-A1- 19 610 970
- US-A- 5 940 011
- US-A- 6 043 773
- US-A1- 2004 257 266

## Beschreibung

Die Erfindung betrifft ein FMCW-Radarverfahren (FMCW = frequency modulated continuous wave) nach dem Oberbegriff des Anspruchs 1. Die Erfindung betrifft ferner ein Radarsystem nach dem Oberbegriff des Anspruchs 8.

Ein solches Radarverfahren und ein solches Radarsystem ist jeweils aus der US 5,940,011 bekannt. Bei dem bekannten Verfahren wird eine Mehrfach-Antennenkonfiguration eingesetzt, die sechs Abtasträume rechts und links vom Fahrzeug sowie hinter dem Fahrzeug definiert. Ein erster Abtastraum ist an der rechten Seite des Fahrzeugs definiert, ein zweiter Abtastraum ist an der rechten Seite und hinter dem Fahrzeug definiert und überlappt den ersten Abtastraum, ein dritter und ein vierter Abtastraum erstrecken sich vom Heck zu beiden Seiten des Fahrzeugs entlang den benachbarten Fahrstreifen, ein fünfter Abtastraum ist an der linken Seite des Fahrzeugs definiert und ein sechster Abtastraum ist an der linken Seite und hinter dem Fahrzeug definiert und überlappt den zweiten und fünften Abtastraum.

Ein Warnsignal für die rechte Seite wird ausgegeben, wenn ein Hindernis in einer rechten Detektorzone erkannt wird, die vom ersten Abtastraum oder einem Abschnitt des zweiten Abtastraums, der den dritten oder sechsten Abtastraum nicht überlappt, definiert wird. Für die linke Seite wird ein Warnsignal gegebenenfalls analog gebildet. Ein Rückfahr-Warnsignal wird abgegeben, wenn ein Hindernis in einer Überlappungszone zwischen dem zweiten und sechsten Abtastraum erkannt wird. Der dritte und vierte Abtastraum erkennen Hindernisse, deren Fahrgeschwindigkeit das Hindernis innerhalb einer vorgegebenen Zeitspanne in die rechte oder linke Detektorzone eintreten lässt, sodass ein entsprechendes Warnsignal für die rechte oder linke Seite abgegeben wird.

Damit offenbart die US 5,940,011 eine Ortserkennung durch logische Kombination von Ereignissen in mehreren Abtasträumen und eine Geschwindigkeitserkennung im dritten oder vierten Abtastraum.

Dabei wird die Geschwindigkeit eines vom Radarsystem detektierten Objektes mittels einer 2D-Parameterschätzung aus mehreren Entfernungen bestimmt. Dafür führt eine 2D-Parameter-Berechnungseinrichtung Berechnungen auf einer 2D-Objekt-RaumAnordnung aus, die von einer adaptiven
Schwellenwerteinrichtung generiert wird. Die 2D-Parameter-Berechnungseinrichtung generiert ein 2D-Schätzsignal, das von der Geschwindigkeit und der Entfernung von möglichen detektierten Objekten abhängige Komponenten aufweist. Dabei werden nur Objekte analysiert, die größer als das Schwellenbereichsprofil-Signal sind und nur die Objektwege, die einer Bewegung mit konstanter Geschwindigkeit am nächsten kommen, passieren den Schwellenwert. Ein Objekt ist gültig, wenn es über genug Schwellenintervalle hinweg besteht und wenn sein Weg mit einem relativ nicht beschleunigenden Weg übereinstimmt. Dieser Schätzwert wird dann für eine Vorhersage-Entscheidung darüber verwendet, ob das Objekt innerhalb der nächsten Sekunde in die seitliche Detektionszone hineingelangt.

Die US 5,940,011 nimmt für ihren Algorithmus in Anspruch, dass dieser überlegene Störsignal-Unterdrückungseigenschaften (superior clutter rejection properties) aufweist und Objekte zurückweist, die sich außerhalb erlaubter Geschwindigkeitsgrenzen befinden. Für eine rückwertige und seitliche Objektdetektion, für die nur eine Entfernungsinformation erforderlich ist, wird der 2D-Parameteralgorithmus nicht ausgeführt (vergleiche US 5,940,011, Spalte 7, Zeilen 16-38).

Aus der DE 196 10 970 A1 ist ein FMCW-Radar bekannt.

Ganz allgemein wird bei einem FMCW-Radar die Frequenz abgestrahlter Radarwellen nach einem vorgegebenen Muster zeitlich periodisch variiert. An einem Objekt reflektierte Radarwellen haben beim Empfang durch das Radarsystem die zweifache Objekt-Entfernung zurückgelegt und treffen mit einer dazu proportionalen Zeitverzögerung wieder am Radarsystem ein.

Da sich die Frequenz der abzustrahlenden Radarwellen während dieser Zeitverzögerung geändert hat, weisen die zu einem bestimmten Zeitpunkt im Radarsystem propagierenden Sendesignale und Empfangssignale einen Frequenzunterschied d_f (r) auf, der von der Objektentfernung r und der Art der Sendefrequenzvariation abhängig ist. Bei zeitlich linearer Variation und relativ zum Radarsystem ruhenden Objekten ist d_f (r) direkt proportional zur Objektentfernung. Bei einer Relativbewegung mit Relativgeschwindigkeit v tritt zusätzlich eine geschwindigkeitsabhängige Doppler-Verschiebung der Frequenz auf, deren Vorzeichen von der Richtung der Geschwindigkeit und von dem Vorzeichen der Sendefrequenzvariation abhängig ist.

Zur Ermittlung des Frequenzunterschiedes wird das Sendesignal üblicherweise mit dem Empfangssignal zu einem Zwischenfrequenzsignal gemischt, das als Folge einen spektralen Signalanteil bei dem Betrag des Frequenzunterschiedes und weitere Anteile bei höheren Frequenzen aufweist. Durch eine Tiefpassfilterung werden die Anteile höherer Frequenzen abgetrennt und das verbleibende Signal, in dem sich die laufzeitabhängigen und geschwindigkeitsabhängigen Frequenzverschiebungen abbilden, wird spektral analysiert.

Nach der DE 196 10 970 A1 erhält man für periodische Vergrößerungen der Sendefrequenz im Wesentlichen einen Frequenzwert (Spektrallinie) bei der Summe der entfernungsabhängigen und geschwindigkeitsabhängigen Frequenzverschiebungen, während man für periodische Verringerungen der Sendefrequenz einen Frequenzwert bei der Differenz der genannten Frequenzverschiebungen erhält. Durch Bildung von Mittelwert und Differenz dieser Frequenzwerte lassen sich die Werte der entfernungsabhängigen und geschwindigkeitsabhängigen Frequenzverschiebungen einzeln bestimmen. Bei dieser Auswertung werden damit sowohl Entfernungen als auch Geschwindigkeiten letztlich aus der Frequenz des Zwischenfrequenzsignals bestimmt. Dies erfordert jedoch eine eindeutige Zuordnung von Spektrallinien und Objekten, was bei mehreren reflektierenden Objekten in ähnlicher Entfernung nicht ohne weiteres der Fall ist.

Um auch bei mehreren Objekten die Entfernungen und Geschwindigkeiten objektindividuell zu bestimmen, schlägt die eingangs genannte DE 196 10 970 A1 vor, die Entfernungen aus der Frequenz des Zwischenfrequenzsignals und die Geschwindigkeiten aus Phaseninformationen aus dem Zwischenfrequenzsignal abzuleiten. Nach der DE 196 10 970 A1 enthält das Argument des Zwischenfrequenzsignals, also dessen Phase, insbesondere einen entfernungsabhängigen Term. Da sich die Entfernung bei einer Relativbewegung zwischen Radarsystem und Objekt zwischen zwei Perioden der Sendefrequenzvariation geringfügig ändert, ändert sich auch der entfernungsabhängige Term in der Phase des Zwischenfrequenzsignals. Aus dem Ausmaß der Veränderung der Phase während wenigstens zwei Perioden der Sendefrequenzvariation soll nach der DE 196 10 970 A1 auf die Relativgeschwindigkeit geschlossen werden. Dabei wird die Phaseninformation jeweils aus einer Phase einer Fouriertransformierten des Zwischenfrequenzsignals gewonnen. Um zwei Phasenwerte zu erhalten, müssen daher für jedes Objekt zwei Perioden der Variation des Sendesignals durchfahren werden und für jede Periode muss eine Fouriertransformation durchgeführt werden.

Bei Kraftfahrzeugen werden Radarsysteme zur Überwachung der Fahrzeugumgebung eingesetzt, wobei Anwendungen wie Einparkhilfe, Totwinkelüberwachung, Spurwechselassistenz, Türöffnungsassistenz, eine Unfall-Antizipierung (pre-crashsensing) für eine Airbag-Auslösung, Gurtstraffung, Überrollbügel-Aktivierung, Start/Stopp-Betrieb oder Fahrbetrieb mit Abstandsüberwachung und/oder Abstandsregelung (Cruise Control Unterstützung) in Frage kommen.

In bestimmten Verkehrssituationen, zum Beispiel bei dichtem Verkehr auf einer mehrspurigen Straße, kann eine Vielzahl von Objekten im Umfeld eines Kraftfahrzeugs vorhanden sein. Dabei können verschiedene Objekte ähnliche Entfernungen, aber unterschiedliche Geschwindigkeiten aufweisen. Je nach Position und Geschwindigkeit eines Objektes ergeben sich für einen Fahrer und/oder ein Fahrerassistenzsystem unterschiedliche Folgerungen für die Wahl der eigenen Fahrspur und Fahrgeschwindigkeit. Bei einem geplanten Wechsel auf eine bestimmte Fahrspur müssen Positionen und Geschwindigkeiten anderer Fahrzeuge in einem vergleichsweise großen Winkelbereich abgeschätzt werden, um Kollisionen zu vermeiden. Für eine Erfassung von Fahrzeugen, die sich dem Heck des Fahrzeugs nähern oder sich davon entfernen, Fahrzeugen im seitlichen Umfeld, und Fahrzeugen, die sich in Fahrtrichtung nähern oder entfernen, besitzt der Winkelbereich eine Größenordnung von 180 °. Eine genaue Erfassung sämtlicher Positionen und Geschwindigkeiten erfordert dann eine gewisse Zeit. Wegen der in der Regel unterschiedlichen Geschwindigkeiten benachbarter Objekte kann sich die Gesamtsituation im Umfeld des Kraftfahrzeuges relativ schnell deutlich verändern. Daher werden für Kraftfahrzeug-Radarsysteme hohe Informations-Aktualisierungsraten (up date Raten) gefordert.

Forderungen nach einer hohen Informations-Aktualisierungsrate in Verbindung mit einer möglichen Vielzahl von Objekten in einem großen Winkelbereich stehen in einem Gegensatz zu Forderungen nach einer möglichst guten Auflösung der Geschwindigkeiten der einzelnen Objekte.

Vor diesem Hintergrund besteht die Aufgabe der Erfindung in der Angabe eines Radarverfahrens eines Kraftfahrzeug-Radarsystems, das einem Fahrerassistenzsystem oder einem Fahrer die zur Vermeidung von Kollisionen wesentlichen Informationen über Objekte im Fahrzeugumfeld mit einer hohen up date Rate und einer guten Auflösung von Entfernungen und Geschwindigkeiten einzelner Objekte liefert.

Dieser Aufgabe wird in ihren Verfahrensaspekten durch die Merkmale des Anspruchs 1 und ihren Vorrichtungsaspekten durch die Merkmale des Anspruchs 8 gelöst.

Die Geschwindigkeiten, die prinzipiell von einem mit einem ersten Kraftfahrzeug bewegten Radarsystem bestimmbar sind, sind immer Relativgeschwindigkeiten. Sie geben an, wie schnell sich ein radialer Abstand dem ersten Kraftfahrzeug und anderen Kraftfahrzeugen oder Objekten ändert. Verschiedene Fahrzeuge auf verschiedenen Fahrspuren können sich längs dieser Richtung mit stark unterschiedlichen Geschwindigkeiten bewegen. Parallel oder antiparallel zur Fahrtrichtung des ersten Kraftfahrzeugs können sehr unterschiedliche radiale Relativgeschwindigkeiten auftreten, während die (radiale) Relativgeschwindigkeit für ein weiteres Fahrzeug, das sich neben dem ersten Fahrzeug befindet, in der Regel ungefähr gleich Null ist. Der letztere Fall stellt daher ein Beispiel für einen Teilbereich dar, in dem die Entfernungsinformation., beziehungsweise die Information, ob sich überhaupt ein Objekt neben dem ersten Fahrzeug befindet, ausreichend ist.

Dadurch, dass die Erfindung zwischen den ersten Teilbereichen und den zweiten Teilbereichen unterscheidet, wird die Zahl der in einem Zeitabschnitt zu verarbeitenden Informationen reduziert, was die Signalverarbeitung erleichtert. So können zum Beispiel Objekte, die sich in gleichen Entfernungen, aber unterschiedlichen Winkelpositionen befinden, leichter als verschiedene Objekte erkannt werden.

Das sequentielle Abtasten verschiedener Teilbereiche hat allerdings den Nachteil, dass Informationen aus einem bestimmten Teilbereich erst nach einem Abtasten der anderen Teilbereiche aktualisiert werden. Prinzipiell kann dies zu einer unerwünschten Verringerung der up date Rate führen. Mit Blick auf die up date Rate ist es ferner nachteilig, dass die Bestimmung von Geschwindigkeiten bei dem eingangs genannten FMCW-Radarverfahren zeitlich aufwändiger als die Bestimmung von Entfernungen ist. In der Summe kann daher die vollständige Erfassung der Geschwindigkeiten aller Objekte in Verbindung mit der Aufteilung der Fahrzeugumgebung in sequentiell abzutastende Teilbereiche zu up date Raten führen, die für Kraftfahrzeuganwendungen nicht mehr ausreichend sind.

Die Erfindung vermeidet dies dadurch, dass die zeitaufwändige Bestimmung von Geschwindigkeiten nur in den ersten Teilbereichen erfolgt. Dadurch, dass die Geschwindigkeit nur in dem wenigstens einen ersten Teilbereich erfasst wird, kann das Radarverfahren in den ersten und zweiten Teilbereichen unterschiedlich optimiert werden. Solche unterschiedlichen Optimierungen sind Gegenstand abhängiger Ansprüche.

Dabei ist bevorzugt, dass die Frequenz der abgestrahlten Radarwellen periodisch moduliert wird, die Phasenlagen für eine erste Zahl von Perioden ermittelt werden, und die Frequenzverschiebung für eine zweite Zahl von Perioden der Modulation ermittelt wird.

Die Zahl der Perioden stellt einen Optimierungsparameter dar, der die Länge der Zeitabschnitte beeinflusst. Die Länge der Zeitabschnitte steigt mit der Zahl der Perioden. Die Ermittlung von Geschwindigkeiten auf der Basis der ersten Zahl von Perioden und der Entfernungen auf der Basis der zweiten Zahl von Perioden, führt unter der Voraussetzung, dass die erste Zahl und die zweite Zahl ungleich sind, zu Unterschieden in den Längen von ersten Perioden und zweiten Perioden.

Für eine hochauflösende und genaue Geschwindigkeitsmessung ist prinzipiell eine höhere Zahl von Perioden erforderlich als für eine Entfernungsmessung. Es ist daher auch bevorzugt, dass die erste Zahl größer als die zweite Zahl ist.

Ferner ist bevorzugt, dass die erste Zahl größer oder gleich 16 ist und die zweite Zahl gleich 1 ist.

Es hat sich gezeigt, dass diese Zahlen einen guten Kompromiss zwischen den gegenläufigen Forderungen nach einer hohen up date Rate und einer möglichst hohen Auflösung von Entfernungen und Geschwindigkeiten erlauben.

Eine weitere bevorzugte Ausgestaltung zeichnet sich dadurch aus, dass die erste Zahl gleich 32 ist.

Grundsätzlich verbessert sich die Auflösung der Geschwindigkeiten verschiedener Objekte mit steigenden Werten der ersten Zahl. Andererseits verringert sich dann wieder die up date Rate. Die Zahl 32 ist daher als Kompromiss zu verstehen, der eine weiter verbesserte Auflösung bei vertretbaren up date Raten liefert.

Bevorzugt ist auch, dass die Entfernungen mit Hilfe einer ersten Fouriertransformation bestimmt werden, die auf ein tiefpass-gefiltertes Mischungsprodukt eines Sendesignals und eines Empfangssignals angewendet wird, und dass die Geschwindigkeiten mit Hilfe einer zweiten Fouriertransformation bestimmt werden, die auf Phasenlagen von Ergebnissen von mehreren ersten Fouriertransformationen angewendet wird.

Dabei wird unter einer Phasenlage jeder Wert verstanden, aus dem sich die Phase des reflektierten Radarsignals am Empfänger bestimmen lässt. Die Ergebnisse der ersten Fouriertransformation sind im Allgemeinen komplexe Zahlen, die sich bekanntlich in einer Zeigerdarstellung durch Betrag und Phase charakterisieren lassen. Insofern wird in dieser Anmeldung unter einer Phasenlage je nach Zusammenhang die komplexe Zahl oder ihr Winkelargument verstanden.

Die erste Fouriertransformation liefert die Frequenzverschiebungen, die im Weiteren als Maß für die Entfernungen der Objekte verwendet werden. Die Bedeutung der zweiten Fouriertransformation erschließt sich zum Beispiel dadurch, dass man die Phasenlagen in einem Zeigerdiagramm als Zeigerstellungen darstellt. Bei einer Vielzahl von Objekten ergibt sich eine entsprechende Vielzahl von Zeigern. Die zweite Fouriertransformation liefert in diesem Bild sämtliche gesuchten Geschwindigkeiten als Ergebnis einer Fouriertransformation in Form der Drehfrequenzen sämtlicher Zeiger. Die Drehfrequenzen der Zeiger bilden individuelle Änderungen der Phasen und damit der Orte oder Entfernungen der Objekte ab.

Eine weitere Ausgestaltung sieht vor, dass verschiedene Objekte durch ihre Entfernungen und/oder Geschwindigkeiten voneinander unterschieden werden.

Durch die Bestimmung der im Allgemeinen verschiedenen Geschwindigkeiten und ihre Zuordnung zu bestimmten Objekten können auch Objekte voneinander unterschieden werden, die durch die reine Entfernungsbestimmung noch nicht aufgelöst werden.

Bei praktischen Versuchen hat sich gezeigt, dass eine Periodendauer der Modulation abgestrahlter Radarwellen, die kleiner als eine halbe ms ist, einen guten Kompromiss zwischen den Forderungen nach einer hohen up date Rate und einer hohen Auflösung von Geschwindigkeiten liefert.

Bevorzugt ist auch, dass die einzelnen Teilbereiche einen zusammenhängenden Erfassungsbereich des Radarsystems überdecken und dass eine Zahl der ersten Teilbereiche kleiner als eine Zahl der zweiten Teilbereiche ist.

Durch den Zusammenhang werden tote Winkel im Erfassungsbereich vermieden. Je kleiner die Zahl der ersten Teilbereiche ist, desto größer ist die up date Rate. Diese Ausgestaltung optimiert daher die up date Rate.

Mit Blick auf Ausgestaltungen des Radarsystems ist bevorzugt, dass es wenigstens eine dieser bevorzugten Ausgestaltungen des Verfahrens durchführt.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein Blockschaltbild eines erfindungsgemäßen Radarsystems;
- Fig. 2: einen zeitlichen Verlauf eines Sendesignals bei der Durchführung eines erfindungsgemäßen Verfahrens;
- Fig. 3: ein Amplitudenspektrum und ein Phasenspektrum einer ersten Fouriertransformierten eines Empfangssignals; und
- Fig. 4: Realteile von Ergebnissen mehrerer erster Fouriertransformationen wie sie bei einem Ausführungsbeispiel eines erfindungsgemäßen Verfahrens aufgenommen und ausgewertet werden.

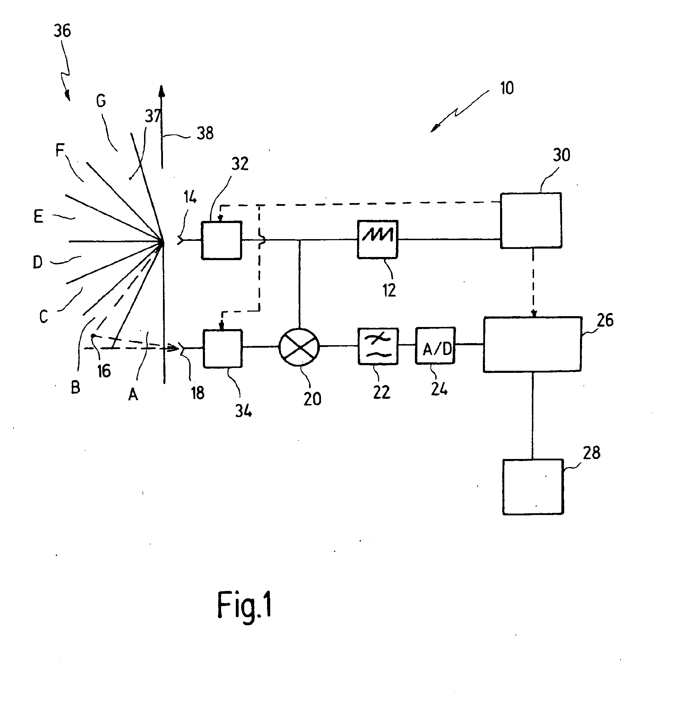

Im Einzelnen zeigt die Fig.1 ein Radarsystem 10 eines Kraftfahrzeuges, das nach dem FMCW-Prinzip arbeitet. Ein Signalgenerator 12 erzeugt Sendesignale mit periodisch modulierter Frequenz. Diese Sendesignale werden über eine Sendeantennenanordnung 14 in Form von Radarwellen abgestrahlt. Von einem Objekt 16 reflektierte Radarwellen, die zu dem Radarsystem 10 zurücklaufen, werden von einer Empfangsantennenanordnung 18 in elektrische Empfangssignale umgewandelt. Ein Mischer 20 mischt diese Empfangsignale mit Sendesignalen, wie sie auch zur Sendeantenne 14 geführt werden. Wie eingangs erläutert wurde, enthält das Mischprodukt einen Signalanteil einer Differenzfrequenz und einer Phasenlage, aus denen prinzipiell die Entfernung und die Geschwindigkeit des Objektes bestimmbar ist. Diese Differenzfrequenz entspricht der Frequenzverschiebung zwischen Sendesignal und Empfangssignal und ist entsprechend kleiner als die Frequenz des Sendesignals.

In einem Tiefpass 22 werden die Signalanteile, die eine höhere Frequenz als die Differenzfrequenz besitzen, abgetrennt, bevor das verbleibende Signal durch einen Analog-Digital-Wandler 24 diskretisiert und in der diskretisierten Form in einer digitalen Signalverarbeitung 26 weiterverarbeitet wird. Ein Anzeigegerät 28 zeigt dem Fahrer Ergebnisse der Weiterverarbeitung an. Eine Steuerung 30 synchronisiert die Aktivitäten der digitalen Signalverarbeitung 26, des Signalgenerators 12 und einer Antennenschaltung 32, die zur Steuerung der Sendeantennenanordnung 14 dient, und/oder einer Antennenschaltung 34, die zur Steuerung der Empfangsantennenanordnung 18 dient.

In einer Ausgestaltung wird die Sendeantennenanordnung 14 so gesteuert, dass sie nacheinander verschiedene Teilbereiche A, B, C, D, E, F, G einer Umgebung 36 des Kraftfahrzeugs beleuchtet. In der Regel wird dazu eine Sendekeule der Sendeantennenanordnung 14 nach dem phased array Prinzip elektronisch geschwenkt. Die Empfangsantennenanordnung 18 kann in diesem Fall eine breite Empfangscharakteristik aufweisen, mit der die ganze Umgebung 36 abgedeckt wird. Andere Ausgestaltungen können alternativ oder ergänzend schmale Empfangswinkelbereiche in Verbindung mit breiten Sendekeulen realisieren. In jedem Fall erfolgt die Steuerung der Sendeantennenanordnung 14 und/oder der Empfangsantennenanordnung 18 so, dass Objekte 16, 37, die sich in verschiedenen Teilbereichen B, G der Umgebung 36 befinden, zeitlich getrennt voneinander erfasst werden. Ein Bereich, aus dem zu einem bestimmten Zeitpunkt Radarsignale empfangen und verarbeitet werden, wird im Folgenden auch als aktiver Bereich bezeichnet.

Die Antennenanordnungen 14 und 18 sind in einer Ausgestaltung seitlich links am Heck des Kraftfahrzeuges angeordnet, das sich in eine mit dem Pfeil 38 bezeichnete Fahrtrichtung bewegt. Die Umgebung 36, die durch das Radarsystem bereichsweise periodisch abgetastet wird, erstreckt sich dann zum Beispiel über einen Winkel in der Größenordnung von 180 °, der etwa durch die Fahrtrichtung 38 und deren Gegenrichtung eingeschlossen wird. In der Ausgestaltung der Fig. 1 ist die Umgebung 36 äquidistant in sieben Teilbereiche A, B, C, D, E, F, G aufgeteilt. Es versteht sich jedoch, dass die Aufteilung nicht äquidistant sein muss und auch mehr oder weniger Teilbereiche aufweisen kann. Wesentlich ist in jedem Fall, dass das Radarverfahren, mit dem das Radarsystem 10 betrieben wird, in ersten Zeitabschnitten für Objekte in wenigstens einem ersten Teilbereich einer Umgebung des Kraftfahrzeugs durchgeführt wird, und in zweiten Zeitabschnitten Entfernungen, nicht aber Geschwindigkeiten für Objekte in wenigstens einem zweiten Teilbereich der Umgebung bestimmt.

Bei der Ausgestaltung der Fig. 1 sind die Teilbereiche A und B in diesem Sinn erste Teilbereiche, während die übrigen Teilbereiche C, D, E, F und G zweite Teilbereiche sind. Im Fall des Teilbereichs D ist die Radialgeschwindigkeit anderer Fahrzeuge in der Regel vernachlässigbar. Bei einem geplanten Spurwechsel ist es jedoch wichtig, festzustellen, ob sich dort überhaupt ein Objekt befindet. Dies gilt im Wesentlichen auch für die Teilbereiche C und E. Die Teilbereiche F und G liegen im Sichtfeld des Fahrers, so dass dort ebenfalls auf eine Geschwindigkeitsbestimmung durch das Radarsystem 10 verzichtet werden kann.

Andererseits ist es unter Umständen, zum Beispiel bei einem beabsichtigten Spurwechsel wichtig, die Geschwindigkeit und die Entfernung eines anderen Fahrzeuges zu kennen, das sich außerhalb des Sichtfeldes des Fahrers von hinten nähert und vom Radarsystem 10 im Teilbereich A oder B erfasst wird. Daher wird hier die aufwändigere Geschwindigkeitsbestimmung vorgenommen, während die Entfernungen für alle Objekte in den ersten Teilbereichen A, B und den zweiten Teilbereichen C, D, E, F und G bestimmt werden. Es versteht sich jedoch, dass diese Zuordnung der Teilbereiche A bis G zu ersten und zu zweiten Teilbereichen nicht zwingend ist und die Aufteilung auch anders erfolgen kann.

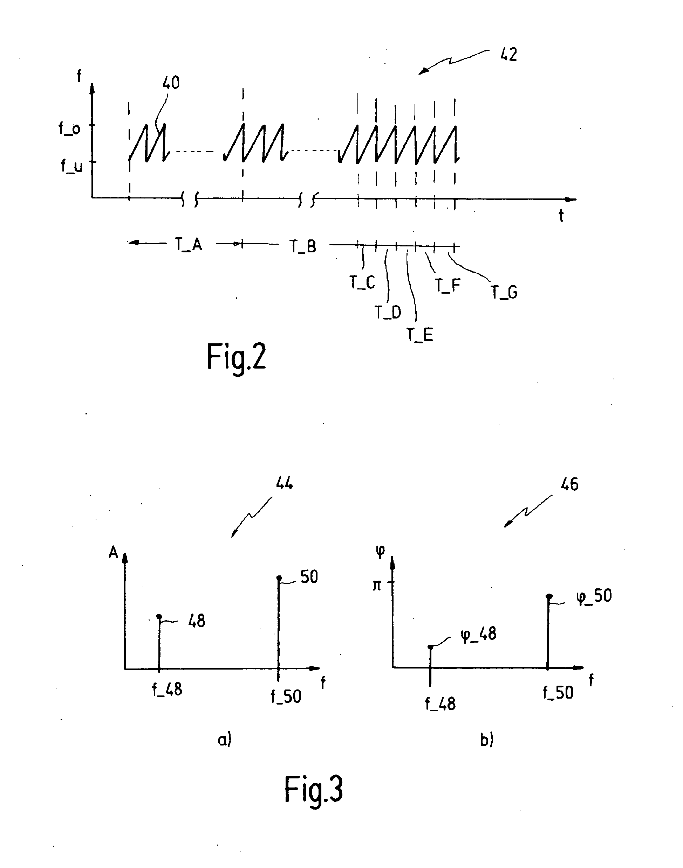

Fig. 2 veranschaulicht die Unterschiede in der Steuerung der Antennenanordnung 14 und/oder 18 in Verbindung mit der dabei erfolgenden Modulation der Frequenz des Sendesignals bei einem Zyklus der sequentiellen Abtastung der Umgebung 36. Die Frequenz f des Sendesignals wird bei dieser Ausgestaltung periodisch jeweils rampenförmig auf einen oberen Grenzwert f_o vergrößert und anschließend stufenförmig auf einen unteren Grenzwert f_u zurückgesetzt. Eine einzelne Frequenzrampe 40 wird auch als chirp bezeichnet.

Parallel zu dem resultierenden Verlauf 42 der Frequenz des Sendesignals erfolgt die Steuerung der Antennenanordnungen 14 und/oder 18 so, dass während eines ersten Zeitabschnitts T_A, der sich über eine erste Zahl n_1 von Perioden der Frequenzmodulation (n_1 chirps) erstreckt, Entfernungen und Geschwindigkeiten von Objekten im ersten Teilbereich A ermittelt werden. Entsprechend werden danach, während des weiteren ersten Zeitabschnitts T_B, Entfernungen und Geschwindigkeiten von Objekten in dem weiteren ersten Teilbereich B ermittelt.

Dagegen erfolgt die Steuerung der Antennenanordnungen 14. und/oder 18 für die zweiten Zeitabschnitte T_C, T_D, T_E, T_f und T_G so, dass jeweils nach einer zweiten Zahl n_2 von Perioden im Verlauf 40 auf das ein anderes Segment in der Umgebung 36 umgeschaltet wird und jeweils nur Entfernungen, nicht aber Geschwindigkeiten von Objekten in diesen Segmenten bestimmt werden. Die zweite Zahl n_2 ist kleiner als die erste Zahl n_1 und besitzt bevorzugt und so auch in der Darstellung der Fig. 2, den Wert 1. Der Wert der ersten Zahl n_1 ist dagegen bevorzugt größer als 16 und besitzt zum Beispiel den Wert 32. Abweichend von der Darstellung der Fig. 2 kann die Umschaltung auch in einer anderen Reihenfolge der Teilbereiche A, B, C, ..... erfolgen.

Die Entfernungen können zumindest näherungsweise bereits aus einem Chirp 40 bestimmt werden. Grundsätzlich hängt die auszuwertende Frequenzverschiebung zwischen Sendesignal und Empfangssignal von der Entfernung und der Geschwindigkeit der Objekte ab. Je kleiner die Bandbreite der Modulation ist und je langsamer die Modulation verläuft, desto geringer fällt die Entfernungsabhängigkeit aus. Im Extremfall einer verschwindenden Modulation, wenn also kontinuierlich nur mit einer Frequenz gesendet wird, entspricht die Frequenz des Empfangssignals bis auf einen Offset, der durch den geschwindigkeitsabhängigen Dopplereffekt verursacht wird, der Sendefrequenz. Erfolgt die Frequenzmodulation dagegen schnell und über eine große Bandbreite, dominiert der Entfernungseinfluss auf die Frequenzverschiebung.

In einer Ausgestaltung besteht jeder Chirp 40 aus einer Frequenzrampe von 24,05 GHz bis 24,35 GHz, die in 256 Mikrosekunden durchfahren wird. Damit sind die Chirps kurz und steil genug, so dass von einer dominierenden Entfernungsabhängigkeit ausgegangen werden kann. Wenn reflektierte Radarwellen von mehreren Objekten aus verschiedenen Entfernungen an der Empfangsantennenanordnung einlaufen, weist das Empfangssignal entsprechend mehrere Differenzfrequenzanteile auf.

Die Auswertung des Empfangssignals erfolgt in der digitalen Signalverarbeitung 26 aus der Fig. 1 durch Verarbeitung von Ausgangssignalfolgen s diskreter Werte des AD-Wandlers 24. Für jeden Chirp 40 des Sendesignals ergibt sich eine zugeordnete Ausgangssignalfolge. Für jedes erfasste Objekt enthält die Ausgangssignalfolge einen Signalanteil, der durch Reflexionen dieses Objektes erzeugt wird. Dieser Signalanteil besitzt eine (zeitabhängig veränderliche) Frequenz und eine entfernungsabhängige Phasenlage. Letztere resultiert daraus, dass die Entfernung im Allgemeinen kein ganzzahliges Vielfaches einer Wellenlänge der Radarwellen ist.

Die digitale Signalverarbeitung 26 bildet eine erste Fouriertransformierte S dieser Ausgangssignalfolge s von reellen Abtastwerten. Diese im Allgemeinen komplexe Fouriertransformierte S besitzt bekanntlich ein Betragsspektrum oder Amplitudenspektrum und ein Phasenspektrum.

Fig. 3 a zeigt ein Beispiel eines Amplitudenspektrums 44, und Fig. 3b zeigt ein Beispiel eines zugehörigen Phasenspektrums 46 einer ersten Fouriertransformierten S eines Empfangssignals.

Das Betragsspektrum 44 gibt an, mit welchem relativen Gewicht A eine bestimmte Frequenz in dem Empfangssignal vertreten ist. In einer Zeigerdarstellung des komplexen Ergebniswertes der ersten Fouriertransformation entspricht die Länge eines Zeigers einem relativen Gewicht A. Die Gewichte A sind daher über der Frequenz f aufgetragen. Betrachtet man als Beispiel eine Situation mit zwei reflektierenden Objekten in verschiedenen Entfernungen, so ergeben sich Peaks 48, 50 bei zwei Frequenzen f_48, f_50. Die Signale des Objektes in der kleineren Entfernung sind an der Empfangsantennenanordnung 18 vergleichsweise schwächer, was sich in der geringeren Amplitude ihres Peaks 48 im Betragsspektrum 44 abbildet.

Im Phasenspektrum 46 bilden sich die Phasenlagen *ϕ*_48, *ϕ*_50 der Signalanteile, also die Winkelstellungen der zugehörigen komplexen Zeiger, ebenfalls in einer Auftragung über der Frequenz f ab. Dabei sind die Phasenlagen *ϕ*_48, *ϕ*_50 jeweils der Frequenz f_48, f_50 ihres Signalanteils zugeordnet.

Aus dem Amplitudenspektrum der ersten Fouriertransformierten S eines Chirps werden die Entfernungen sämtlicher in dem aktiven Teilbereich erfassten Objekte bestimmt. Dies gilt sowohl für die ersten Teilbereiche als auch für die zweiten Teilbereiche. Die Entfernung ergibt sich als Produkt der Frequenzverschiebung mit der Lichtgeschwindigkeit und der Periodendauer der Modulation, geteilt durch die Bandbreite der Modulation und einen Faktor 2.

Die Geschwindigkeiten werden dagegen nur in den ersten Teilbereichen bestimmt. Um die Geschwindigkeiten der Objekte zu bestimmen werden für einen ersten Teilbereich n_1 aufeinander folgende Chirps mit Index i, i = 1, 2, ... , n_1 durchfahren und für jeden chirp wird eine Fouriertransformierte Si der reellen Ausgangssignalfolge si und deren Phasenspektrum bestimmt und gespeichert. Dabei wird unter dem Phasenspektrum jedes Spektrum von Werten verstanden, die eine Phaseninformation enthalten. Das Phasenspektrum kann daher insbesondere auch das Spektrum der komplexen Ergebnisse der ersten Fouriertransformation sein. Zusätzlich werden die Entfernungen reflektierender Objekte aus wenigstens einem Amplitudenspektrum bestimmt, das für diesen Zweck ausgewertet wird.

Wenn sich Radarsystem 10 und Objekt relativ zu einander bewegen, ändert sich die Phase des zugehörigen Empfangssignalanteils von Chirp zu Chirp. Diese Phasenänderungen bilden sich in der Phase der Fouriertransformierten und damit in deren Phasenspektrum ab. Für jeden Chirp ergibt sich ein weiteres Phasenspektrum.

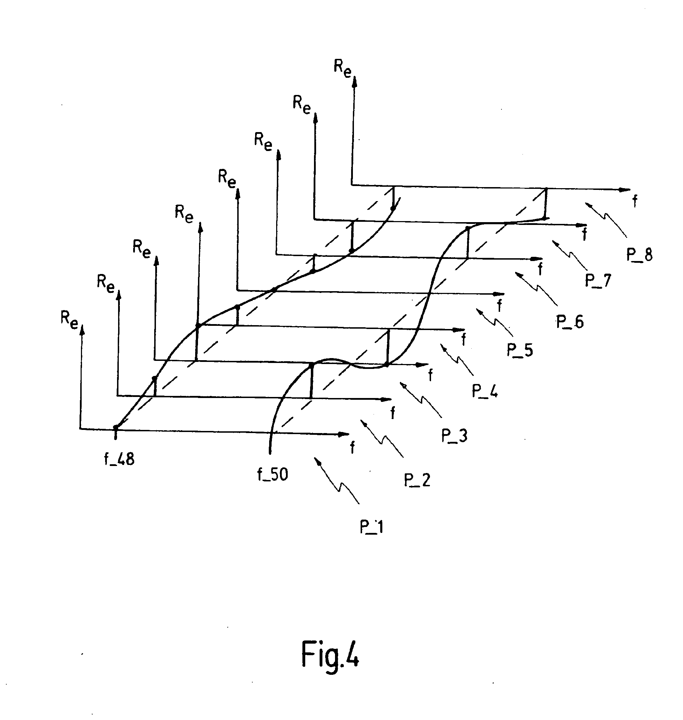

Fig. 4 zeigt schematisch mögliche Realteile Re von Ergebnissen erster Fouriertransformationen von Signalen, die von zwei Objekten bei acht chirps reflektiert wurden. Dabei wurden die Realteile jeweils über der Frequenz f und der Zeit, respektive der Nummer P_1 bis P_8 eines Chirps, aufgetragen. Die bei einer Frequenz f_48, f_50 aufgetragenen Realteile gehören jeweils zu einem Objekt. Bei einer Zeigerdarstellung zugehöriger komplexer Zahlen stellt jeder Realteil eine Projektion des komplexen Zeigers auf die reelle Achse dar. Die harmonischen Schwingungen ergeben sich bei einer konstanten Winkelgeschwindigkeit des komplexen Zeigers. Diese Winkelgeschwindigkeit ist ein Maß für die relative Objektgeschwindigkeit im Zeitbereich und kann bei einem Kraftfahrzeug Radarsystem zumindest näherungsweise als konstant betrachtet werden. Eine Periodendauer der periodischen Änderung der Realteile entspricht insbesondere der Zeit, in der sich der Abstand zwischen Radarsystem 10 und dem Objekt um eine halbe Wellenlänge der Radarstrahlung verändert hat. Wie man aus der Fig. 4 entnimmt, ist die Periodendauer des Objektes, dessen Entfernung durch die Frequenz f_48 charakterisiert wird, größer als die Periodendauer bei der Frequenz f_50. Die größere Periodendauer ergibt sich als Folge einer kleineren Geschwindigkeit im Zeitbereich.

Bei einer Radarfrequenz von etwa 24 Ghz ist die Wellenlänge etwa 1,25 cm. Bei einer Relativgeschwindigkeit von zum Beispiel 90 Km/h ändert sich der Abstand etwa alle 25 Mikrosekunden um eine halbe Wellenlänge, so dass sich eine Phasenänderungsfrequenz von etwa 40 KHz ergibt.

Diese Phasenänderungsfrequenz ergibt sich als Ergebnis (genauer: als Amplituden- oder Betrags-Spektrum) einer zweiten Fouriertransformation, die auf die diskreten Phasenwerte oder die zugehörigen komplexen Ergebniswerte der ersten Fouriertransformationen für ein zugehöriges Objekt angewandt wird. Die zweite Fouriertransformation wird ebenfalls durch die digitale Signalverarbeitung 28 nach den bekannten Methoden der schnellen Fouriertransformation (FFT) berechnet. Analog ergibt sich die entsprechende Phasenänderungsfrequenz für jedes weitere Objekt als Ergebnis einer weiteren zweiten Fouriertransformation. Alternativ zu einer getrennten Berechnung einer Vielzahl zweiter Fouriertransformationen können die gesuchten Phasenänderungsfrequenzen auch durch eine zweidimensionale Fouriertransformation berechnet werden.

## Patentansprüche

1. FMCW-Radarverfahren, bei dem ein Radarsystem (10) eines Kraftfahrzeugs Radarwellen abstrahlt und empfängt und bei dem eine Entfernung eines Objektes (16) zu dem Kraftfahrzeug aus einer Frequenzverschiebung zwischen gesendeten und empfangenen Radarwellen bestimmt wird und bei dem eine Geschwindigkeit eines Objektes bestimmt wird, wobei das Verfahren in ersten Zeitabschnitten (T_A, T_B) für Objekte in wenigstens einem ersten Teilbereich (A, B) eines Erfassungsbereichs des Radarsystems (10) durchgeführt wird, und in zweiten Zeitabschnitten (T_C, T_D, T_E, T_F, T_G) Entfernungen, nicht aber Geschwindigkeiten für Objekte in wenigstens einem zweiten Teilbereich (C, D, E, F, G) des Erfassungsbereichs bestimmt werden, wobei eine Frequenz der abgestrahlten Radarwellen periodisch moduliert wird und wobei die Teilbereiche sequentiell abgetastet werden, **dadurch gekennzeichnet, dass** die Geschwindigkeit eines Objekts aus Phasenlagen empfangener Radarwellen bestimmt wird, die Phasenlage für eine erste Zahl (n_1) von Perioden ermittelt werden und die Frequenzverschiebung für eine zweite Zahl (n_2) von Perioden der Modulation ermittelt wird, wobei die zweite Zahl (n_2) kleiner als die erste Zahl (n_1) ist.

2. Verfahren nach Anspruch 1, **dadurch gekennzeichnet, dass** die zweite Zahl (n_2) gleich 1 und die erste Zahl (n_1) größer oder gleich 16 ist.

3. Verfahren nach Anspruch 2, **dadurch gekennzeichnet, dass** die erste Zahl (n_1) gleich 32 ist.

4. Verfahren nach wenigstens einem der Ansprüche 1 bis 3, **dadurch gekennzeichnet, dass** die Entfernungen mit Hilfe einer ersten Fouriertransformation bestimmt werden, die auf ein tiefpass-gefiltertes Mischungsprodukt eines Sendesignals und eines Empfangssignals angewendet wird, und dass die Geschwindigkeiten mit Hilfe wenigstens einer zweiten Fouriertransformation bestimmt werden, die auf Phasenlagen von Ergebnissen der ersten Fouriertransformation angewendet wird.

5. Verfahren nach Anspruch 4, **dadurch gekennzeichnet, dass** verschiedene Objekte durch ihre Entfernungen und/oder Geschwindigkeiten voneinander unterschieden werden.

6. Verfahren nach wenigstens einem der Ansprüche 1 bis 5, **dadurch gekennzeichnet, dass** eine Periodendauer der Modulation abgestrahlter Radarwellen kleiner als eine halbe ms ist.

7. Verfahren nach wenigstens einem der Ansprüche 1 bis 6, **dadurch gekennzeichnet, dass** die einzelnen Teilbereiche einen zusammenhängenden Erfassungsbereich des Radarsystems überdecken und dass eine Zahl der ersten Teilbereiche kleiner als eine Zahl der zweiten Teilbereiche ist.

8. Radarsystem (10) eines Kraftfahrzeugs, das Radarwellen abstrahlt und empfängt und das eine Entfernung eines Objektes zu dem Kraftfahrzeug aus einer Frequenzverschiebung zwischen gesendeten und empfangenen Radarwellen bestimmt und das eine Geschwindigkeit eines Objektes bestimmt, wobei das Radarsystem (10) die Entfernungen und Geschwindigkeiten in ersten Zeitabschnitten (T_A, T_B) für Objekte in wenigstens einem ersten Teilbereich (A, B) eines Erfassungsbereichs des Radarsystems (10) bestimmt, und in zweiten Zeitabschnitten (T_C, T_D, T_E, T_F, T_G) Entfernungen, nicht aber Geschwindigkeiten für Objekte in wenigstens einem zweiten Teilbereich (C, D, E, F, G) des Erfassungsbereichs des Radarsystems (10)bestimmt, wobei das Radarsystem (10) eine Frequenz der abgestrahlten Radarwellen periodisch moduliert und die Teilbereiche sequentiell abtastet, **dadurch gekennzeichnet, dass** das Radarsystem (10) dazu eingerichtet ist, die Geschwindigkeit eines Objekts aus Phasenlagen empfangener Radarwellen zu bestimmen, die Phasenlagen für eine erste Zahl (n_1) von Perioden zu ermitteln, und die Frequenzverschiebung für eine zweite Zahl (n_2) von Perioden der Modulation zu ermitteln, wobei die zweite Zahl (n_2) kleiner als die erste Zahl (n_1) ist.

9. Radarsystem (10) nach Anspruch 8, **dadurch gekennzeichnet, dass** es wenigstens eines der Verfahren nach den Ansprüchen 2 bis 7 durchführt.

## Claims

1. FMCW radar method in which a radar system (10) in a motor vehicle emits and receives radar waves and in which a distance from an object (16) to the motor vehicle is determined from a frequency shift between sent and received radar waves and in which a speed for an object is determined, wherein the method is performed in first time periods (T_A, T_B) for objects in at least one first sub-region (A, B) of a detection region of the radar system (10), and second time periods (T_C, T_D, T_E, T_F, T_G) are used to determine distances, but not speeds, for objects in at least one second sub-region (C, D, E, F, G) of the detection region, wherein a frequency of the emitted radar waves is periodically modulated and wherein the sub-regions are sequentially scanned, **characterized in that** the speed of an object is determined from phase angles of received radar waves, the phase angles are ascertained for a first number (n_1) of periods and the frequency shift is ascertained for a second number (n_2) of periods of the modulation, wherein the second number (n_2) is lower than the first number (n_1).

2. Method according to Claim 1, **characterized in that** the second number (n_2) is equal to 1 and the first number (n_{_}1) is greater than or equal to 16.

3. Method according to Claim 2, **characterized in that** the first number (n_1) is equal to 32.

4. Method according to at least one of Claims 1 to 3, **characterized in that** the distances are determined by using a first Fourier transformation which is applied to a low-pass-filtered mixed product of a sent signal and a received signal and **in that** the speeds are determined by using at least one second Fourier transformation which is applied to phase angles of results from the first Fourier transformation.

5. Method according to Claim 4, **characterized in that** different objects are distinguished from one another by their distances and/or speeds.

6. Method according to at least one of Claims 1 to 5, **characterized in that** a period duration of the modulation of emitted radar waves is shorter than half an ms.

7. Method according to at least one of Claims 1 to 6, **characterized in that** the individual sub-regions cover a contiguous detection region of the radar system and **in that** a number of the first sub-regions is lower than a number of the second sub-regions.

8. Radar system (10) in a motor vehicle which emits and receives radar waves and which determines a distance from an object to the motor vehicle from a frequency shift between sent and received radar waves and which determines a speed for an object, wherein the radar system (10) determines the distances and speeds in first time periods (T_A, T_B) for objects in at least one first sub-region (A, B) of a detection region of the radar system (10), and uses second time periods (T_C, T_D, T_E, T_F, T_G) to determine distances, but not speeds, for objects in at least one second sub-region (C, D, E, F, G) of the detection region of the radar system (10), wherein the radar system (10) periodically modulates a frequency of the emitted radar waves and sequentially scans the sub-regions, **characterized in that** the radar system (10) is set up to determine the speed of an object from phase angles of received radar waves, to ascertain the phase angles for a first number (n_1) of periods and to ascertain the frequency shift for a second number (n_2) of periods is of the modulation, wherein the second number (n_2) is lower than the first number (n_{_}1).

9. Radar system (10) according to Claim 8, **characterized in that** it carries out at least one of the methods according to Claims 2 to 7.

## Revendications

1. Procédé radar de type FMCW, dans lequel un système radar (10) d'un véhicule automobile émet et reçoit des ondes radar et dans lequel la distance d'un objet (16) par rapport au véhicule automobile et la vitesse de l'objet sont déterminées à partir du décalage en fréquence des ondes radar émises et des ondes radar reçues,
dans des premiers intervalles de temps (T_A, T_B), le procédé étant exécuté pour des objets situés dans au moins une partie (A, B) d'une zone de détection du système radar (10) et
dans des deuxièmes intervalles de temps (T_C, T_D, T_E, T_F, T_G), les distances mais non les vitesses des objets sont déterminées dans au moins une deuxième partie (C, D, E, F, G) de la zone de détection,
la fréquence des ondes radar émises étant modulée périodiquement et les parties étant examinée successivement,
**caractérisé en ce que**
la vitesse d'un objet est déterminée à partir des déphasages des ondes radar reçues, les déphasages d'un premier nombre (n_1) de périodes étant déterminés et le décalage en fréquence étant déterminé pour un deuxième nombre (n-2) de périodes de la modulation, le deuxième nombre (n_2) étant inférieur au premier nombre (n_1).

2. Procédé selon la revendication 1, **caractérisé en ce que** le deuxième nombre (n_2) est égal à 1 et le premier nombre (n_1)) est supérieur ou égal à 16.

3. Procédé selon la revendication 2, **caractérisé en ce que** le premier nombre (n_1) est égal à 32.

4. Procédé selon au moins l'une des revendications 1 à 3, **caractérisé en ce que** les distances sont déterminées à l'aide d'une première transformation de Fourier qui est appliquée sur le produit mixte, filtré en bande passante basse, d'un signal émis et d'un signal reçu, et **en ce que** les vitesses sont déterminées à l'aide d'au moins une deuxième transformation de Fourier qui est appliquée sur les déphasages des résultats de la première transformation de Fourier.

5. Procédé selon la revendication 4, **caractérisé en ce que** différents objets sont distingués les uns des autres à partir de leur distance et/ou de leur vitesse.

6. Procédé selon au moins l'une des revendications 1 à 5, **caractérisé en ce que** la durée de la période de la modulation des ondes radar émises est inférieure à une demi ms.

7. Procédé selon au moins l'une des revendications 1 à 6, **caractérisé en ce que** les différentes parties couvrent une zone de détection continue du système radar et **en ce que** le nombre des premières parties est inférieur au nombre des deuxièmes parties,

8. Système radar (10) pour véhicule automobile qui émet et reçoit des ondes radar et qui déterminé la distance d'un objet par rapport au véhicule automobile à partir du décalage en fréquence entre les ondes radar émises et les ondes radar reçues et qui détermine la vitesse d'un objet,
dans des premiers intervalles de temps (T_A, T_B), le système radar (10) déterminant les distances et les vitesses d'objets présents dans au moins une première partie (A, B) d'une zone de détection du système radar (10) et
dans des deuxièmes intervalles de temps (T_C, T_{_}D, T_E, T_F, T_G), les distances mais non les vitesses des objets sont déterminées dans au moins une deuxième partie (C, D, E, F, G) de la zone de détection du système radar (10),
le système radar (10) modulant périodiquement la fréquence des ondes radar émises et examinant successivement les parties,
**caractérisé en ce que**
le système radar (10) est conçu pour déterminer la vitesse d'un objet à partir des déphasages des ondes radar reçues, pour déterminer les déphasages pour un premier nombre (n_1) de périodes et pour déterminer le décalage en fréquence pour un deuxième nombre (n_2) de périodes de la modulation, lé deuxième nombre (n_2) étant inférieur au premier nombre (n_1).

9. Système radar (10) selon la revendication 8, **caractérisé en ce qu'**il exécute au moins un des procédés selon les revendications 2 à 7.
